(19) Europäisches Patentamt
European Patent Office
Office européen des brevets

(11) **EP 4 336 158 A1**

(12) **EUROPÄISCHE PATENTANMELDUNG**

(43) Veröffentlichungstag:
**13.03.2024 Patentblatt 2024/11**

(21) Anmeldenummer: **22194165.1**

(22) Anmeldetag: **06.09.2022**

(51) Internationale Patentklassifikation (IPC):
**G01K 7/42** (2006.01) **G01K 13/02** (2021.01)
**G01K 1/143** (2021.01) **G01K 1/18** (2006.01)
**G01K 15/00** (2006.01)

(52) Gemeinsame Patentklassifikation (CPC):
**G01K 13/02; G01K 1/143; G01K 1/18; G01K 7/42;
G01K 7/427; G01K 15/007**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **BIERWEILER, Thomas
76131 Karlsruhe (DE)**
• **SCHERER, Tim
76185 Karlsruhe (DE)**
• **VON DOSKY, Stefan
76149 Karlsruhe (DE)**

(74) Vertreter: **Siemens Patent Attorneys
Postfach 22 16 34
80506 München (DE)**

(54) **TEMPERATURMESSEINRICHTUNG**

(57) Die Erfindung betrifft eine Temperaturmesseinrichtung (100) zur Bestimmung einer Mediums-Temperatur (MT) eines Mediums (M) über eine erste Temperatur (T1) und eine zweite Temperatur (T2) an einer Messstelle (MS) in unmittelbarer Umgebung einer das Medium (M) umschließenden Oberfläche (O), umfassend einen ersten Sensor (S1) zur Ermittlung der ersten Temperatur (T1) und einen zweiten Sensor (S2) zur Ermittlung der zweiten Temperatur (T2) sowie ein Messwertverarbeitungsmittel (10), welches über eine erste Zuleitung (L1) mit dem ersten Sensor (S1) und über eine zweite Zuleitung (L2) mit dem zweiten Sensor (S2) verbunden ist und in einem Messintervall (ti) zyklisch über die Zeit (t) die erste Temperatur (T1) und die zweite Temperatur (T2) als Messwert zur Bestimmung der Mediums-Temperatur (MT) bereitstellt, wobei ein Bewertungsmittel (11), welches dazu ausgestaltet ist eine Änderungsrate (dT/dt) aus einer Differenz aus der ersten Temperatur (T1) und der zweiten Temperatur (T2) zu ermitteln und in Abhängigkeit von ihrem Wert ein Qualitätsmerkmal (QC) bereitzustellen, weiterhin ausgestaltet das Qualitätsmerkmal (QC) als Bewertung einer Messgenauigkeit der Mediums-Temperatur (MT) zusammen mit dem Messwert für die Mediums-Temperatur (MT) zu einem übergeordneten System (101) zu übertragen.

FIG 1

**(Forts. nächste Seite)**

EP 4 336 158 A1

# FIG 2

100

13

12

TL

KL1
KL2
KL3
KL4
KL5

101

11

dT/dt

QC

10

T1,T2 => MT

ti

15

16

L2

L1

21

22

25

## Beschreibung

Die Erfindung betrifft eine Temperaturmesseinrichtung zur Bestimmung einer Mediums-Temperatur eines Mediums über eine erste Temperatur und eine zweite Temperatur an einer Messstelle in unmittelbarer Umgebung einer das Medium umschließenden Oberfläche, umfassend einen ersten Sensor zur Ermittlung der ersten Temperatur und einen zweiten Sensor zur Ermittlung der zweiten Temperatur sowie ein Messwertverarbeitungsmittel, welches über eine erste Zuleitung mit dem ersten Sensor und über eine zweite Zuleitung mit dem zweiten Sensor verbunden ist und in einem Messintervall zyklisch über die Zeit die erste Temperatur und die zweite Temperatur als Messwert zur Bestimmung der Mediums-Temperatur bereitstellt.

Ein derartiges Verfahren ist bereits aus der DE 198 00 753 A1 bekannt. In dieser Offenlegungsschrift wird ein Verfahren angegeben, wie man mit einer Temperaturmesseinrichtung mit einem zugehörigen Sensor eine nicht-invasive Messtechnik ausführen kann. Das bedeutet, in der DE 198 00 753 A1 ist bereits ein Sensor für eine nicht-invasive Temperaturmessung, insbesondere in einem Fluid, das in einem Rohr strömt, vorgestellt. Aus einem Wärmeflussverhalten dQ/dt des Sensors und externen gemessenen Temperaturen wird die zu messende Temperatur des Mediums ermittelt.

Die Namur-Empfehlung 107 "Selbstüberwachung und Diagnose von Feldgeräten" fordert für Temperaturmessgeräte eine Selbstüberwachung und zeigt dabei unterschiedliche Fehlerarten auf, die erkannt werden sollen.

Insbesondere bei einer nicht-invasiven Temperaturmessung können unvorhersehbare äußere Umstände eine Messgenauigkeit beeinflussen. Die äußeren Umstände wären z.B.:

1. Eine fehlerhafte Montage,

2. Eine abrupte Schwankung der Umgebungstemperatur durch eine fehlende und/oder defekte Isolierung und

3. Sprünge in der Messtemperatur, beispielsweise durch Spülung mit heißer/kalter Flüssigkeit oder Gasen.

Es ist Aufgabe der vorliegenden Erfindung für ein nichtinvasives Temperaturmessgerät eine Eigenbewertung der Messgenauigkeit zu erzielen und damit der Forderung gemäß der Namur-Empfehlung 107 gerecht zu werden.

Für die eingangs genannte Temperaturmesseinrichtung wird die Aufgabe dadurch gelöst, dass ein Bewertungsmittel vorhanden ist, welches dazu ausgestaltet ist eine Änderungsrate aus einer Differenz aus der ersten Temperatur und der zweiten Temperatur zu ermitteln und in Abhängigkeit von ihrem Wert ein Qualitätsmerkmal bereitzustellen, weiterhin ist das Bewertungsmittel ausgestaltet das Qualitätsmerkmal als Bewertung einer Messgenauigkeit der Mediums-Temperatur zusammen mit dem Messwert für die Mediums-Temperatur zu einem übergeordneten System zu übertragen.

Das Qualitätsmerkmal ist beispielsweise ein Quality Code. Die Erfindung beschreibt den Effekt, dass ein Differenzquotient aus der Differenz der ersten Temperatur und der zweiten Temperatur im eingeschwungenen Zustand im besonderen Maße von einem Differenzquotient in einem nicht eingeschwungenen Zustand abweicht. Diese Abweichung bzw. Änderung in dem Differenzquotienten dT/dt (t1-t2) mit t2 als zweite Temperatur und t1 als erste Temperatur wiedergibt wird überwacht und als ein Qualitätsmerkmal gemeinsam mit dem Messwert übertragen. Die erste Temperatur ist dabei die Temperatur die näher am Medium ist, auch als untere Temperatur gekennzeichnet. T2 wiederum die darüberliegende Temperatur; auch als obere Temperatur angegeben. Ein solches Qualitätsmerkmal bzw. ein solcher Quality-Code kann unterschiedliche Ausprägungen haben. Eine erste Ausprägung wäre eine einfache 1 Bit-Aussage gut/ nicht gut, eine zweite Ausprägung wäre eine n-Bit Aussage mit mehreren Qualitätsabstufungen basierend auf der Amplitude des Differenzquotienten, eine weitere Ausprägung wäre, dass diese Informationen einen Prozessleitsystem als Abstufung der Genauigkeit nach den Genauigkeitsklassen der DIN IEC 751 mitgeteilt werden.

In einer weiteren Ausgestaltung der Temperaturmesseinrichtung weist diese ein Analysemittel auf, welches dazu ausgestaltet ist, die Änderungsrate als einen zeitkontinuierlichen Vertrauensverlauf aufzuzeichnen und in einem Speichermittel abzulegen, aus welchem der Vertrauensverlauf bei Bedarf über eine Netzwerkschnittstelle zu dem übergeordneten System zu Diagnosezwecken hochgeladen werden kann.

In den übergeordneten Systemen können somit abrupte Schwankungen der Umgebungstemperatur und auch Sprünge in der Mediums-Temperatur sichtbar gemacht werden und ein Anlagenbetreiber kann dementsprechend darauf reagieren und dies nicht unbedingt als einen Messfehler interpretieren.

Der zeitkontinuierliche Vertrauensverlauf entspricht demnach einem Trust-Level, welcher während der gesamten Messreihe bei einem eingeschwungenen Zustand in einem Bereich von +/- 0,02 liegt. In Bereichen, in denen der eingeschwungene Zustand nicht gegeben ist, weicht dieser Differenzquotient ab. Demnach ist eine Korrelation des Vertrauensverlaufs bzw. des Tust-Levels (Differenzquotient) mit dem Messfehler aus dem Vertrauensverlauf aufbauend auf der Aufzeichnung der zeitkontinuierlichen Änderungsrate ableitbar.

Für eine besonders genaue Temperaturermittlung ist es von Vorteil, wenn das Messverarbeitungsmittel dazu ausgestaltet ist die Mediums-Temperatur mit der Formel:

$$MT = T1 + k0 \times (T1-T2) + k1 \times d(T1-T2)/dt$$

$$T_{process} = T_{surface} + k_0(T_{surface} - T_{top}) + k_1\frac{d}{dt}(T_{surface} - T_{top})$$

zu berechnen und damit die Genauigkeit in einem dynamischen Verhalten zu verbessern.

Die Mediums-Temperatur und somit die Temperatur beispielsweise in einem Prozessrohr wird in einem einfachsten Fall mit MT = T1 + KO x (T1-T2) ermittelt. Ein erster Korrekturfaktor wird beispielsweise in einem Labor für Wandungs-Materialien unterschiedlicher Wärmeleitfähigkeit und mindestens zwei Wandstärken messtechnisch ermittelt. Für Prozessrohre mit anderen Wandstärken kann dann linear interpoliert werden.

In einer weiteren Ausprägung kann dann zusätzlich zu einem linearen Term der Gleichung der Differenzquotient, also die Änderungsrate genutzt werden. Dadurch kann eine Ansprechzeit noch weiter verbessert werden. Die Temperatur im Prozessrohr wird dann mit MT = T1 + k0 × (T1-T2) + k1 × d(T1-T2)/dT ermittelt. Zusätzlich kann ein weiterer Korrekturfaktor Offset addiert werden.

Im Hinblick auf eine erleichterte Diagnose des Messwertes in einem übergeordneten Prozesssystem ist es von Vorteil, wenn die Temperaturmesseinrichtung ein Klassifizierungsmittel aufweist, welches ausgestaltet ist in Abhängigkeit von dem Betrag der Änderungsrate jedem Messwert eine Genauigkeitsklasse zuzuordnen.

Bei den Genauigkeitsklassen und der Klassifizierung kann beispielsweise nach der entsprechenden Norm vorgegangen werden. Mit Hilfe der so eingeführten Selbstdiagnosefunktion werden die Messwerte und die Funktionsfähigkeit der Sensorik bzw. der Temperaturmesseinrichtung plausibilisiert. Dies erfolgt über die kontinuierliche Überwachung der Signalgüte. Dadurch werden negative Einflüsse auf die Messwerte oder auf die Sensorik erkannt und per Statusmeldung können diese den Betreiber übermittelt werden, welcher wiederum mit diesen Statusmeldungen die Messwerte besser interpretieren kann. Die Betreiber von solchen Anlagen profitieren von einer erhöhten Anlageverfügbarkeit und können z.B. Wartungen genau dann vornehmen, wenn diese notwendig sind.

Die Temperaturmesseinrichtung ist weiterhin mit einem Wärmekopplungselement ausgestaltet, welches als ein Messkopf dient und in dem die Sensoren angeordnet sind, wobei das Wärmekopplungselement eine Koppelfläche aufweist und ausgestaltet ist zur Montage an einem Behälter oder einem Rohr, wobei die Koppelfläche zur Oberfläche des Behälters oder zur Oberfläche des Rohrs gerichtet ist.

Die Messgenauigkeit wird weiterhin erhöht, wenn der erste Sensor und der zweite Sensor in dem Wärmekopplungselement in unterschiedlichen Abständen zur Koppelfläche angeordnet ist.

Die Zeichnung zeigt ein Ausführungsbeispiel der Erfindung, dabei zeigt:

FIG 1    eine Sensoreinheit bestehend aus einem ersten und einen zweiten Temperatursensor,

FIG 2    die Temperaturmesseinrichtung als Blockschaltbild,

FIG 3    eine Darstellung eines Messverlaufes für eine Temperaturmessung,

FIG 4    eine Darstellung einer Messreihe mit einer zugeordneten Darstellung eines Vertrauensverlaufs,

FIG 5    ein Beispiel für eine experimentelle Ermittlung eines Korrekturfaktors und

FGI 6    ein weiteres Beispiel für die experimentelle Ermittlung des Korrekturfaktors.

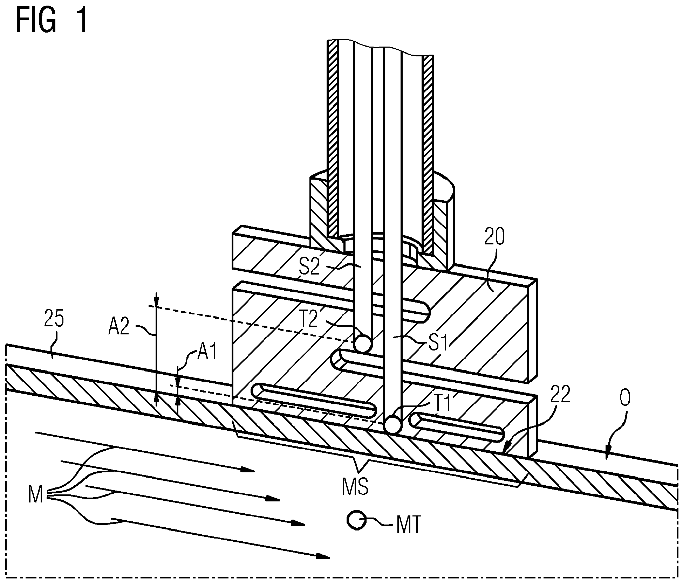

Gemäß FIG 1 ist ein Wärmekopplungselement 20 der Temperaturmesseinrichtung 100 dargestellt. Das Wärmekopplungselement 20 ist als ein Messkopf 21 ausgestaltet, in welchem ein erster Sensor S1 und ein zweiter Sensor S2 angeordnet sind. Das Wärmekopplungselement 20 weist eine Koppelfläche 22 auf und ist ausgestaltet zur Montage an einem Rohr 25. Die Koppelfläche 22 ist zur Oberfläche O des Rohres 25 gerichtet.

In dem Rohr 25 strömt ein Medium M, wobei die Temperaturmesseinrichtung 100 zur Bestimmung einer Mediums-Temperatur MT des Mediums M über eine erste Temperatur T1 und eine zweite Temperatur T2 an einer Messstelle MS in unmittelbarer Umgebung einer das Medium M umschließenden Oberfläche O ausgestaltet ist. Der erste Sensor S1 und der zweite Sensor S2 in dem Wärmekopplungselement 20 sind in unterschiedlichen Abständen A1,A2 zu der Koppelfläche 22 angeordnet. Der erste Sensor S1 ist demnach in einem ersten Abstand A1 und der zweite Sensor S2 ist in einem zweiten Abstand A2 zur Koppelfläche 22 angeordnet.

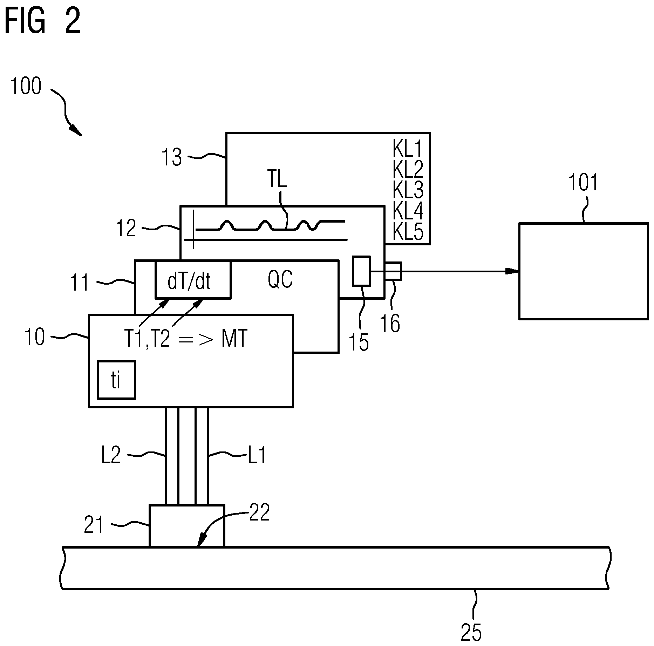

Die FIG 2 zeigt die Temperaturmesseinrichtung 100 zur Bestimmung der Mediums-Temperatur MT des Mediums M gemäß FIG 1. Über den ersten Sensor S1 zur Ermittlung der ersten Temperatur T1 und dem zweiten Sensor S2 zur Ermittlung der zweiten Temperatur T2 können die Temperaturwerte einem Messwertverarbeitungsmittel 10 zugeführt werden. Über eine erste Leitung L1 und eine zweite Leitung L2 werden die Messwerte an das Messwertverarbeitungsmittel 10 weitergegeben. Das Messwertverarbeitungsmittel 10 ist ausgestaltet in einem Messintervall ti zyklisch über die Zeit t die erste Temperatur T1 und die zweite Temperatur T2 als Messwert zur Bestimmung der Mediums-Temperatur MT bereitzustellen. Um ein Qualitätsmerkmal QC als Bewertung einer Messgenauigkeit der Mediums-Temperatur MT bereitzustellen, weist die Temperaturmesseinrichtung 100 ein Bewertungsmittel 11 auf. Das Bewertungsmittel 11 ist dazu ausgestaltet eine Änderungsrate dT/dt aus einer Differenz aus der ersten Temperatur T1 und der zweiten Temperatur T2 zu ermitteln und in Abhängigkeit von ihrem Wert das Qualitätsmerkmal QC bereitzustellen. Weiterhin ist das Bewertungsmittel 11 ausgestaltet, das Qualitätsmerkmal QC als Bewertung der Messgenauigkeit der Mediums-Temperatur MT zusammen mit dem Messwert für die Mediums-Temperatur MT zu einem übergeordneten System 101 zu übertragen.

Die Temperaturmessenrichtung 100 weist weiterhin ein Analysemittel 12 auf, welches dazu ausgestaltet ist, die Änderungsrate dT/dt als einen zeitkontinuierlichen Vertrauensverlauf TL aufzuzeichnen und in einem Speichermittel 15 abzulegen. Das Analysemittel 12 ist weiterhin dazu ausgestaltet, dass das übergeordnete System 101 bei Bedarf über eine Netzwerkschnittstelle 16 zu Diagnosezwecken den Vertrauensverlauf TL hochladen kann.

In dem Messwertverarbeitungsmittel 10 ist mit Vorteil die Formel

$$MT = T1 + k0 \times (T1-T2) + k1 \times d(T1-T2)/dt$$

implementiert. Die Temperaturmesseinrichtung 100 weist des Weiteren ein Klassifizierungsmittel 13 auf, welches ausgestaltet ist in Abhängigkeit von dem Betrag der Änderungsrate dT/dt jedem Messwert eine Genauigkeitsklasse KL1,...,KL5 zuzuordnen. Demnach kann ein Messwert als ein Qualitätsmerkmal QC eine erste Genauigkeitsklasse KL1, eine zweite Genauigkeitsklasse KL2, eine dritte Genauigkeitsklasse KL3, eine vierte Genauigkeitsklasse KL4 oder eine fünfte Genauigkeitsklasse KL5 hinzugefügt werden.

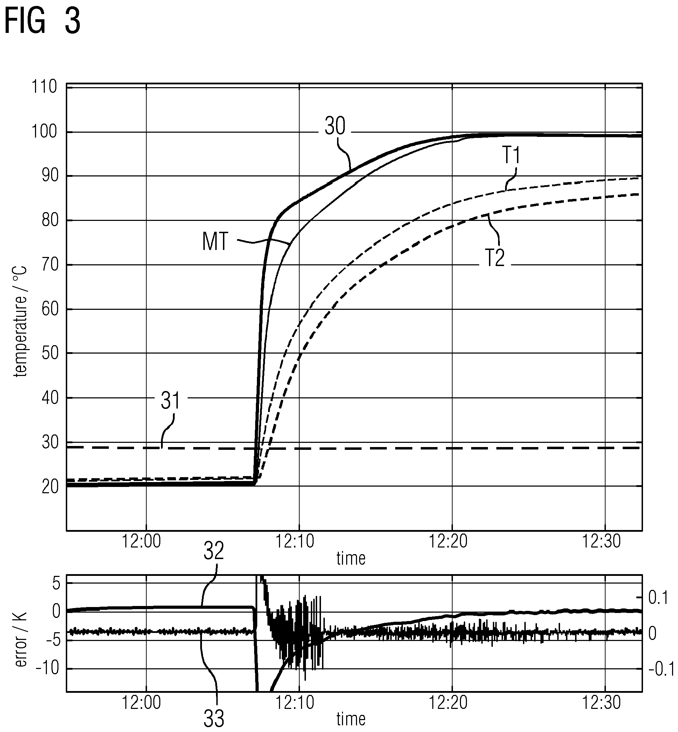

Die FIG 3 zeigt in einem oberen Diagramm eine Referenztemperatur 30, eine Umgebungstemperatur 31, eine Mediums-Temperatur MT, eine erste Temperatur T1 und eine zweite Temperatur T2. Der Temperaturverlauf der Mediums-Temperatur MT wird mit der bereits beschriebenen Formel aus den Temperaturverläufen T1, T2 ermittelt.

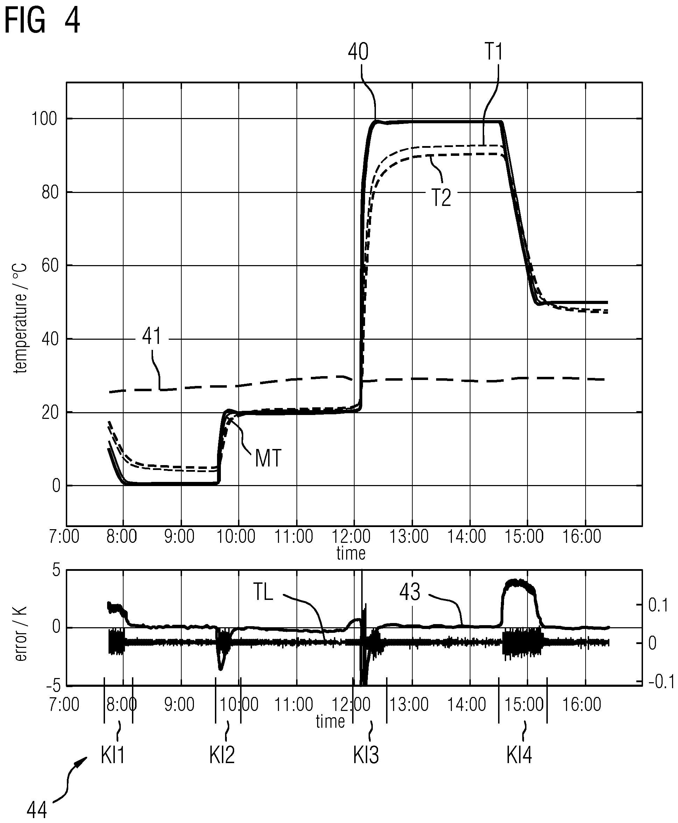

Weiterhin zeigt die FIG 3 den zugehörigen Verlauf einer Änderungsrate 33 mit einem Fehlerwert 32 (in Kelvin). In der FIG 3 ist ein Messwertverlauf für einen Temperatursprung von 20 auf 100 Grad dargestellt. Da sich bei dem Temperatursprung die Änderungsrate dT/dt rasch ändert, kann dies aus dem Fehler 32 bzw. aus der Änderungsrate 33, welche gemäß FIG 4 als ein Vertrauensverlauf TL dargestellt wird bezogen werden.

Die FIG 4 zeigt nun einen kompletten Messverlauf mit einer Referenztemperatur 40, einer Umgebungstemperatur 41, einem Fehlerwert 43 und den Vertrauensverlauf TL (Trust-Level). Die Mediums-Temperatur MT wird wiederum gemäß der Formel aus der ersten Temperatur T1 und der zweiten Temperatur T2 ermittelt.

Der Vertrauensverlauf TL kann in Korrekturintervalle KI1,...,KI4 unterteilt werden. So ist beispielsweise in einem Messzeitraum von ca. 7:40 bis 8:10 Uhr ein erstes Korrekturintervall KI1, in einem Zeitbereich von 9:40 bis 9:45 Uhr ist ein zweites Korrekturintervall KI2, in einem Zeitbereich von 12:00 bis 12:45 Uhr ist ein drittes Korrekturintervall KI3 und in einem Zeitbereich von 14:30 bis 15:20 Uhr ist ein viertes Korrekturintervall KI4 eingezeichnet.

Diese Korrekturintervalle KI1,...,KI4 können nun softwaretechnisch ausgewertet werden oder einem Anlagenbetreiber sogar als Signalverlauf dargestellt werden. Das bedeutet, jedes Mal wenn ein derartiges Korrekturintervall KI1,...,KI4 ausgewertet wird oder einem Anlagenbetreiber angezeigt wird, weiß dieser Bescheid, dass der zu ermittelte Messwert, nämlich die Mediums-Temperatur MT nicht unbedingt fehlerfrei gemessen sein muss, denn es liegt vermutlich eine hohe Änderungsrate dT/dt vor. Zusätzlich können dem ermittelten Messwert für die Mediums-Temperatur MT Qualitätsmerkmale QC in Form von Genauigkeitsklassen KL1,...,KL5, welche auch von dem Kurvenverlauf des Vertrauensverlaufs TL in den Korrekturintervallen KI1,...,KI4 ermittelt werden und mitgegeben werden.

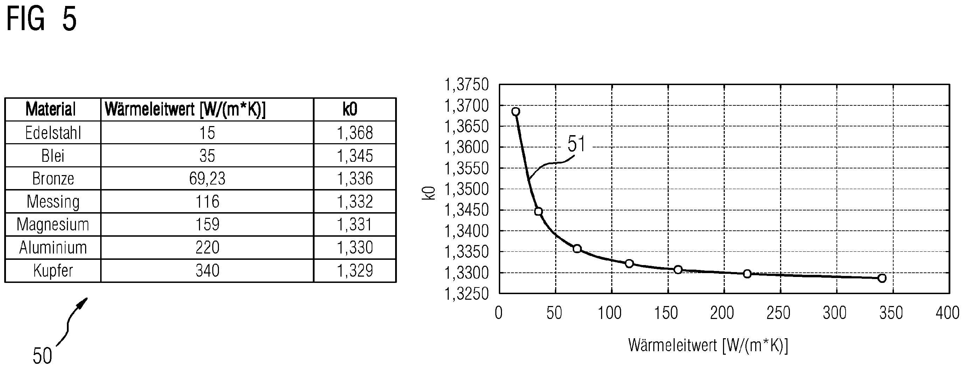

Die FIG 5 zeigt eine Materialtabelle 50 und einen Korrekturfaktorverlauf 51. Die in der Formel zur Ermittlung der Mediums-Temperatur MT genutzten Korrekturfaktoren K0,K1 werden experimentell in Laborversuchen ermittelt. So wird abhängig von unterschiedlichen Materialien wie z.B. Edelstahl, Blei, Bronze, Messing, Magnesium, Aluminium und Kupfer und ihren zugehörigen Wärmeleitwerten die Temperatur in Messungen ermittelt und mit dem Rechenwert der Formel wird der Korrekturfaktor über den Wärmeleitwert bestimmt.

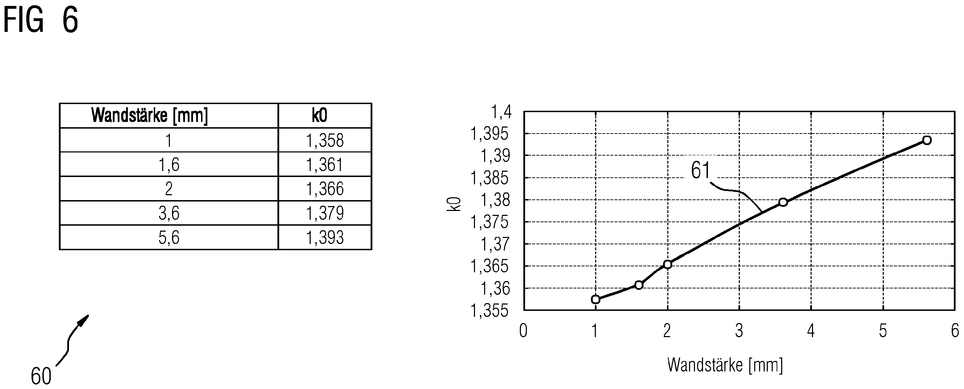

In der FIG 6 wird der Korrekturfaktor mit Hilfe von unterschiedlichen Wandstärken, welche in einer Wandstärketabelle 60 abgebildet sind, ermittelt. So kann beispielsweise messwerttechnisch mit dem real gemessenen Messwert des Mediums M und dem berechneten Messwert der Formel für unterschiedliche Wandstärken, wie z.B. 1, 1,6, 2, 3,6 und 5,6 mm ein Korrekturfaktorverlauf 61 ermittelt werden.

Die ermittelten Korrekturfaktoren, welche experimentell im Labor ermittelt wurden, werden in die Formel integriert, um die Messgenauigkeit bzw. die Messwertermittlung zu verbessern.

**Patentansprüche**

1. Temperaturmesseinrichtung (100) zur Bestimmung einer Mediums-Temperatur (MT) eines Mediums (M) über eine erste Temperatur (T1) und eine zweite Temperatur (T2) an einer Messstelle (MS) in unmittelbarer Umgebung einer das Medium (M) umschließenden Oberfläche (O), umfassend einen ersten Sensor (S1) zur Ermittlung der ersten Temperatur (T1) und einen zweiten Sensor (S2) zur Ermittlung der zweiten Temperatur (T2) sowie ein Messwertverarbeitungsmittel (10), welches über eine erste Zuleitung (L1) mit dem ersten Sensor (S1) und über eine zweite Zuleitung (L2) mit dem zweiten Sensor (S2) verbunden ist und in einem Messintervall (ti) zyklisch über die Zeit (t) die erste Temperatur (T1) und die zweite Temperatur (T2) als Messwert zur Bestimmung der Mediums-Temperatur (MT) bereitstellt,
**gekennzeichnet durch**
ein Bewertungsmittel (11), welches dazu ausgestaltet ist eine Änderungsrate (dT/dt) aus einer Differenz aus der ersten Temperatur (T1) und der zweiten Temperatur (T2) zu ermitteln und in Abhängigkeit von ihrem Wert ein Qualitätsmerkmal (QC) bereitzustellen, weiterhin ausgestaltet das Qualitätsmerkmal (QC) als Bewertung einer Messgenauigkeit der Mediums-Temperatur (MT) zusammen mit dem Messwert für die Mediums-Temperatur (MT) zu einem übergeordneten System (101) zu übertragen.

2. Temperaturmesseinrichtung (100) nach Anspruch 1, weiterhin aufweisend ein Analysemittel (12), welches dazu ausgestaltet ist die Änderungsrate (dT/dt) als einen zeitkontinuierlichen Vertrauensverlauf (TL) aufzuzeichnen und in einem Speichermittel (15) abzulegen, aus welchem der Vertrauensverlauf (TL) bei Bedarf über eine Netzwerkschnittstelle (16) zu dem übergeordneten System (101) zu Diagnosezwecken hochgeladen werden kann.

3. Temperaturmesseinrichtung (100) nach Anspruch 1 oder 2, wobei das Messwertverarbeitungsmittel (10) weiterhin dazu ausgestaltet ist die Mediums-Temperatur (MT) mit der Formel:
$MT = T1 + k0 \times (T1\text{-}T2) + k1 \times d(T1\text{-}T2)/dt$ zu berechnen und damit die Genauigkeit in einem dynamischen Verhalten zu verbessern.

4. Temperaturmesseinrichtung (100) nach einem der Ansprüche 1 bis 3, weiterhin aufweisend ein Klassifizierungsmittel (13), welches ausgestaltet ist in Abhängigkeit von dem Betrag der Änderungsrate (dT/dt) jedem Messwert eine Genauigkeitsklasse (KL1,..,KL5) zuzuordnen.

5. Temperaturmesseinrichtung (100) nach einem der Ansprüche 1 bis 4, mit einem Wärmekopplungselement (20), welches als Messkopf (21) dient und in dem die Sensoren (S1, S2) angeordnet sind, wobei das Wärmekopplungselement (20) eine Koppelfläche (22) aufweist und ausgestaltet ist zur Montage an einem Behälter oder einem Rohr (25), wobei die Koppelfläche (22) zur Oberfläche (O) des Behälters oder zur Oberfläche (O) der Rohrs (25) gerichtet ist.

6. Temperaturmesseinrichtung (100) nach Anspruch 5, wobei der erste Sensor (S1) und der zweite Sensor (S2) in dem Wärmekopplungselement (20) in unterschiedlichen Abständen (A1,A2) zur Koppelfläche (22) angeordnet ist.

FIG 1

FIG 2

FIG 3

FIG 4

FIG 5

| Material | Wärmeleitwert [W/(m*K)] | k0 |
|---|---|---|
| Edelstahl | 15 | 1,368 |
| Blei | 35 | 1,345 |
| Bronze | 69,23 | 1,336 |
| Messing | 116 | 1,332 |
| Magnesium | 159 | 1,331 |
| Aluminium | 220 | 1,330 |
| Kupfer | 340 | 1,329 |

50

51

k0

Wärmeleitwert [W/(m*K)]

EP 4 336 158 A1

FIG 6

| Wandstärke [mm] | k0 |
|---|---|
| 1 | 1,358 |
| 1,6 | 1,361 |
| 2 | 1,366 |
| 3,6 | 1,379 |
| 5,6 | 1,393 |

60

61

k0

Wandstärke [mm]

1,4
1,395
1,39
1,385
1,38
1,375
1,37
1,365
1,36
1,355

0   1   2   3   4   5   6

Europäisches
Patentamt

European
Patent Office

Office européen
des brevets

**EUROPÄISCHER RECHERCHENBERICHT**

**Nummer der Anmeldung**

**EP 22 19 4165**

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | **KLASSIFIKATION DER ANMELDUNG (IPC)** |
| A,D | DE 198 00 753 A1 (SIEMENS AG [DE]) 22. Juli 1999 (1999-07-22) * Seite 2, Zeile 36 - Seite 3, Zeile 52; Abbildung 1 * ----- | 1-6 | INV. G01K7/42 G01K13/02 G01K1/143 G01K1/18 G01K15/00 |
| A | EP 3 446 086 A1 (ABB SCHWEIZ AG [CH]) 27. Februar 2019 (2019-02-27) * Seite 6, Zeile 19 - Seite 7, Zeile 2; Abbildung 1 * ----- | 1-6 | |
| A | US 2018/238741 A1 (RUD JASON HAROLD [US] ET AL) 23. August 2018 (2018-08-23) * Absatz [0024] - Absatz [0055]; Abbildungen 1-6 * ----- | 1-6 | |
| A | EP 2 383 556 A2 (WILO SE [DE]) 2. November 2011 (2011-11-02) * Absatz [0039] - Absatz [0063]; Abbildungen 1-2 * ----- | 1-6 | |
| | | | **RECHERCHIERTE SACHGEBIETE (IPC)** G01K |

Der vorliegende Recherchenbericht wurde für alle Patentansprüche erstellt

| Recherchenort | Abschlußdatum der Recherche | Prüfer |
|---|---|---|
| Den Haag | 3. Februar 2023 | Rosello Garcia, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 4165

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2023

| Im Recherchenbericht angeführtes Patentdokument | Datum der Veröffentlichung | Mitglied(er) der Patentfamilie | Datum der Veröffentlichung |
|---|---|---|---|
| DE 19800753 A1 | 22-07-1999 | KEINE | |
| EP 3446086 A1 | 27-02-2019 | CN 109073474 A | 21-12-2018 |
| | | DE 102016107335 A1 | 26-10-2017 |
| | | EP 3446086 A1 | 27-02-2019 |
| | | US 2019041275 A1 | 07-02-2019 |
| | | WO 2017182491 A1 | 26-10-2017 |
| US 2018238741 A1 | 23-08-2018 | AU 2018224018 A1 | 05-09-2019 |
| | | CA 3053768 A1 | 30-08-2018 |
| | | CN 108458798 A | 28-08-2018 |
| | | CN 206905923 U | 19-01-2018 |
| | | EP 3586095 A1 | 01-01-2020 |
| | | JP 7007035 B2 | 24-01-2022 |
| | | JP 2020508474 A | 19-03-2020 |
| | | RU 2723067 C1 | 08-06-2020 |
| | | US 2018238741 A1 | 23-08-2018 |
| | | WO 2018156383 A1 | 30-08-2018 |
| EP 2383556 A2 | 02-11-2011 | DE 102010019113 A1 | 03-11-2011 |
| | | EP 2383556 A2 | 02-11-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19800753 A1